# EUROPÄISCHE PATENTSCHRIFT

(11) **EP 2 433 241 B1**
(45) Veröffentlichungstag und Bekanntmachung des Hinweises auf die Patenterteilung: **10.04.2019**
(21) Anmeldenummer: 10721332.4
(22) Anmeldetag: 19.05.2010
(51) Int. Cl.: G06F 21/73, H04L 9/06, G06F 7/58

(54) **VERSCHLÜSSELUNGSVERFAHREN**
ENCODING METHODS
PROCÉDÉ DE CODAGE

(30) Priorität: 20.05.2009 DE 102009022233
(43) Veröffentlichungstag der Anmeldung: 28.03.2012
(73) Patentinhaber: Jentzsch, Rolf, 04159 Leipzig (DE); Feustel, Dietmar, 04451 Panitzsch (DE); Topf, Birgit, 04435 Schkeuditz (DE)
(72) Erfinder: JENTZSCH, Rolf, 04159 Leipzig (DE)
(74) Vertreter: Hecht, Jan-David
(86) Internationale Anmeldenummer: PCT/EP2010/003084
(87) Internationale Veröffentlichungsnummer: WO 2010/133355

(56) Entgegenhaltungen:
- WO-A1-97/20266
- US-A1- 2009 097 661
- MIKE HALCROW: "eCryptfs: A Stacked Cryptographic Filesystem" INTERNET CITATION 1. Mai 2007 (2007-05-01), Seiten 1-10, XP002508327 Gefunden im Internet: URL:http://ecryptfs.sourceforge.net/ecrypt fs-article.pdf [gefunden am 2008-12-16]
- CALLAS PGP CORPORATION L DONNERHACKE IKS GMBH H FINNEY PGP CORPORATION D SHAW R THAYER J: "OpenPGP Message Format; rfc4880.txt" IETF STANDARD, INTERNET ENGINEERING TASK FORCE, IETF, CH, 1. November 2007 (2007-11-01), XP015055071 ISSN: 0000-0003
- JENTZSCH R: "Erklärung zum Ende des Wettbewerbes" INTERNET CITATION 4. Januar 2006 (2006-01-04), Seiten 1-9, XP007914714 Gefunden im Internet: URL:http://web.archive.org/web/20070727071 723/www.krypto-sida.de/test.htm [gefunden am 2010-09-06]
- "A Convenient Method for Securely Managing Passwords" ACM, 2 PENN PLAZA, SUITE 701 - NEW YORK USA ORD - 0000-00-00, 14. Mai 2005 (2005-05-14), XP040018583

## Beschreibung

Die vorliegende Erfindung betrifft ein Verschlüsselungsverfahren nach dem Oberbegriff von Anspruch 1. Weiterhin betrifft die Erfindung auch eine Vorrichtung zur Verschlüsselung von Klardaten nach dem Oberbegriff von Anspruch 14 sowie ein Computerprogrammprodukt nach Anspruch 15.

Verschlüsselungsverfahren sind vielfältig bekannt und werden vor allem in der Nachrichtenübermittlung häufig eingesetzt. Allen Verschlüsselungsverfahren gemein ist, dass Klartext oder/und Klardaten (im Folgenden als Klardaten bezeichnet) mit Hilfe eines geheimen Schlüssels in einen Geheimtext bzw. Geheimdaten verschlüsselt wird. Diese Geheimdaten können dann übermittelt werden und im Idealfall ist nur der Besitzer des geheimen Schlüssels in der Lage, die Geheimdaten wieder in die Klardaten rückzuwandeln.

Bekannt ist beispielsweise das informationstheoretisch sichere One-Time-Pad-Verfahren bei dem ein zufälliger Schlüssel, der mindestens die gleiche Länge wie die zu verschlüsselnde Nachricht aufweist, verwendet wird, um die Nachricht zu verschlüsseln. Absender und Empfänger müssen hier den Schlüssel vorher untereinander ausgetauscht haben und dabei sicherstellen, dass der Schlüssel nicht in fremde Hände gelangen kann. Außerdem darf der Schlüssel in diesem Verfahre nur einmal verwendet werden, um die Sicherheit zu gewährleisten.

Nachteilig an diesem sicheren Verfahren ist jedoch, dass der Schlüssel immer nur einmal verwendbar ist und daher vor jedem Nachrichtenaustausch ein Austausch eines solchen Schlüssels stattgefunden haben muss, der zudem noch mindestens die Länge des Nachrichtentextes aufweisen muss. Zwar kann man auch Schlüssel auf Vorrat miteinander vereinbaren, allerdings geht auch dieser Vorrat je nach Intensität der Kommunikation zu Ende. Sollen neue Schlüssel vereinbart werden, müssen die Teilnehmer wieder zusammenkommen. Damit ist das Verfahren zwar sicher, aber andererseits sehr aufwendig und unflexibel.

Andererseits ist aber auch bekannt, Verschlüsselungsverfahren zu verwenden, bei denen der Nutzer einen Schlüssel erhält, der über einen gewissen Zeitraum nicht verändert wird. Dieser Schlüssel ist zumeist kürzer als einer, der im One-Time-Pad-Verfahren Verwendung findet. Nachteilig an diesen Verfahren ist es jedoch, dass mit Hilfe geeigneter Technik und Algorithmen aus der verschlüsselten Nachricht selbst Rückschlüsse auf den Schlüssel gezogen werden können. Die Kommunikation ist also unsicherer als beim One-Time-Pad-Verfahren. Da aus diesem Grunde also zu befürchten steht, dass auf solche in diesen Systemen verwendete Zeichenketten Rückschlüsse von unbefugter Seite gezogen werden können und daher diese Systeme angreifbar sind, müssen diese Zeichenketten in regelmäßigen Abständen erneuert werden. Damit sind aber ähnliche Nachteile verbunden wie beim One-Time-Pad-Verfahren, womit ein hoher Wartungsaufwand und damit verbunden hohe Kosten einhergehen.

Aus US2009097661 ist ein Verfahren bekannt, in dem kryptografische Schlüssel mit einem zufälligen Sitzungsschlüssel gemischt werden, das jedoch rückrechenbar ist.

Die Aufgabe der vorliegenden Erfindung besteht daher darin, ein Verschlüsselungsverfahren zur Verfügung zu stellen, das weniger aufwendig und dabei flexibeler ist, allerdings eine sehr hohe Sicherheit ermöglicht. Weiterhin soll auch eine Vorrichtung und ein entsprechendes Computerprogrammprodukt zur Verfügung gestellt werden.

Diese Aufgabe wird gelöst mit einem Verfahren nach Anspruch 1, einer Vorrichtung nach Anspruch 14 und einem Computerprogramm nach Anspruch 15. Vorteilhafte Weiterbildungen sind in den abhängigen Unteransprüchen angegeben.

Das erfindungsgemäße Verfahren zur Verschlüsselung von Klardaten, weist das Mischen der Klardaten mit einem Schlüssel auf, um kodierte Daten zu bilden, und zeichnet sich dadurch aus, dass es die folgenden Schritte umfasst:
a) Bereitstellen eines Hauptschlüssels,
b) Erzeugung eines zufälligen Sitzungsschlüssels,
c) Erzeugung eines Hilfsschlüssels aus dem Hauptschlüssel und dem Sitzungsschlüssel,
d) Mischung des Hilfsschlüssels und der Klardaten zur Bildung der kodierten Daten und
e) Bildung eines Chiffrats aus den kodierten Daten und dem Sitzungsschlüssel, wobei das Chiffrat Informationen über den Sitzungsschlüssel enthält, so dass mit Hilfe des Hauptschlüssels das Chiffrat in die Klardaten entschlüsselt werden kann.

Im Folgenden wird unter einem Schlüssel, Daten und dgl. eine Zeichenkette, nämlich ein oder mehrere beliebige alphanumerische Zeichen, insbesondere Anordnungen binärer Zufallszahlen, verstanden. Allerdings kann es sich bei den Zeichen auch um beliebige Symbole, Bilder und dgl. handeln.

Dabei liegt der vorliegenden Erfindung die Erkenntnis zugrunde, dass ein Hauptschlüssel, wie beispielsweise beim One-Time-Pad-Verfahren, dann nicht optimal gegenüber Angriffen schützbar ist, wenn er direkt bei der Verschlüsselung verwendet wird. Daher besteht die erfindungsgemäße Lösung der Aufgabe darin, dass der Hauptschlüssel bereitgestellt, allerdings nicht direkt bei der Verschlüsselung verwendet wird, sondern dass ein Hilfsschlüssel aus dem Hauptschlüssel mit Hilfe eines zufälligen Sitzungsschlüssels erzeugt wird. Erst dieser Hilfsschlüssel wird dann für die Verschlüsselung verwendet. Dabei kann vorgesehen sein, dass der Hilfsschlüssel aus dem Hauptschlüssel unter vorheriger Bildung von Arbeitsschlüsseln erzeugt wird.

Ein Angriff auf das erfindungsgemäße Verschlüsselungsverfahren kann zwar gegebenenfalls dazu führen, dass dieser Hilfsschlüssel bekannt wird, jedoch erhält der Hauptschlüssel einen sehr hohen Schutz. Der Hauptschlüssel wird also mehrfach zur Generierung mehrerer Hilfsschlüssel verwendet, d. h. er ist nur dazu hinterlegt, um daraus ständig neue Schlüssel zu erzeugen. Auf diese Weise muss nur einmal für einen langen Benutzungszeitraum ein Hauptschlüssel hinterlegt werden und die Wartungsabstände werden sehr groß.

Diese erfindungsgemäße Idee erleichtert den praktischen Einsatz hochsicherer Verschlüsselungsverfahren, wie des One-Time-Pad-Verfahrens erheblich, da die laufende Versorgung der Kommunikationspartner mit neuen Verbrauchsschlüsseln entfällt.

In einer bevorzugten Ausgestaltung wird in einem Schritt f) aus den Klardaten ein Klardatendummy erzeugt, der in Schritt d) mit dem Hilfsschlüssel zu den codierten Daten gemischt wird. Vorteilhaft kann dabei vorgesehen sein, dass ein zufälliger Hilfsstring erzeugt wird, der bei der Erzeugung des Klardatendummys verwendet wird und insbesondere der Hilfsstring dem Klartextdummy vorangestellt wird und dann Schritt d) ausgeführt wird.

Dadurch, dass in dem Verschlüsselungsverfahren aus den Klardaten ein Klardatendummy erzeugt wird, wird das Verschlüsselungsverfahren noch sicherer, da ein Rückrechnen weiter erschwert wird.

In einer besonders vorteilhaften Weiterbildung ist vorgesehen, dass in Schritt c) und/oder in Schritt f) zumindest ein oder mehrere der folgenden Operationen vorgenommen werden, wobei gegebenenfalls vor Erzeugung des Hilfsschlüssels ein oder mehrere Arbeitsschlüssel aus dem Hauptschlüssel oder vor Erzeugung des Klardatendummys ein oder mehrere Hilfsklardaten aus den Klardaten erzeugt werden:
i) Vornehmen einer Mischung des Hauptschlüssels und/oder eines Arbeitsschlüssels mit dem Sitzungsschlüssel oder Vornehmen einer Mischung der Klardaten und/oder der Hilfsklardaten mit dem Hilfsstring;
ii) Vornehmen einer Aufteilung des Hauptschlüssels, der Klardaten, der Hilfsklardaten und/oder eines Arbeitsschlüssels in mindestens zwei Teile und Änderung der Reihenfolge der Teile;
iii) Vornehmen einer Mischung von zumindest zwei der Schlüssel aus der Gruppe umfassend Hauptschlüssel und die Arbeitsschlüssel oder Vornehmen einer Mischung von zumindest zwei der Daten aus der Gruppe umfassend Klardaten und die Hilfsklardaten;
iv) Vornehmen einer Aufteilung eines der Schlüssel aus der Gruppe umfassend Hauptschlüssel und die Arbeitsschlüssel in zumindest zwei Teile und Mischung der Teile oder Vornehmen einer Aufteilung eines der Daten aus der Gruppe umfassend Klardaten und Hilfsklardaten in zumindest zwei Teile und Mischung der Teile.

Durch die Verwendung dieser Zwischenoperationen wird in noch stärkerem Maße die Sicherheit des Verschlüsselungsverfahrens erhöht.

In Bezug auf Operation ii) kann vorteilhaft vorgesehen werden, dass aus dem Sitzungsschlüssel eine erste Zufallszahl gewonnen wird und der Hauptschlüssel basierend auf der ersten Zufallszahl geteilt wird, wobei bevorzugt der Hauptschlüssel in zwei Hauptschlüssel-Teile geteilt wird und der ursprünglich vor dem anderen Hauptschlüssel-Teil angeordnete Hauptschlüssel-Teil nach diesem anderen Hauptschlüssel-Teil angeordnet wird, und/oder dass aus dem Hilfsstring eine zweite Zufallszahl gewonnen wird und die Klardaten basierend auf der zweiten Zufallszahl geteilt werden, wobei bevorzugt die Klardaten in zwei Klardaten-Teile geteilt werden und der ursprünglich vor dem anderen Klardaten-Teil angeordnete Klardaten-Teil nach diesem anderen Klardaten-Teil angeordnet wird, wobei insbesondere die erste und zweite Zufallszahl gleich ist.

Die Zufallszahl kann beispielsweise dadurch gewonnen werden, dass aus dem Sitzungsschlüssel bzw. einem festgelegtem Teil des Sitzungsschlüssels eine Dezimalzahl gewonnen wird, die auf die Länge des Hauptschlüssels abgebildet wird. Auch dann ist es zweckmäßig, wenn die gewonnene Zufallszahl kleiner ist als die Länge des Hauptschlüssels bzw. kleiner ist als die Länge der Klardaten.

Durch diesen Splitalgorithmus wird die Rückrechenbarkeit weiter erschwert.

Alternativ oder zusätzlich kann in Operation iv) vorgesehen sein, dass der eine Teil nur Zeichen oder Bit-Folgen enthält, die in dem Sitzungsschlüssel oder Hilfsstring enthalten sind, und der andere Teil nur Zeichen oder Bit-Folgen enthält, die nicht in dem Sitzungsschlüssel oder Hilfsstring enthalten sind.

Auch dieser Mischalgorithmus erschwert jeglichen Angriff auf das Verschlüsselungsverfahren beträchtlich.

Besonders vorteilhaft kann vorgesehen werden, dass weiterhin ein Schritt g) vorgenommen wird, in dem eine Verbindungskennung bereitgestellt wird, die charakteristisch ist für die Weiterverarbeitung des Chiffrats, insbesondere dessen Speicherung und/oder Weiterleitung zu einem Empfänger, wobei die Verbindungskennung in Schritt e) verwendet wird, um aus dem Sitzungsschlüssel insbesondere durch Mischung eine Kennung zu erzeugen, aus der mit den kodierten Daten das Chiffrat gebildet wird, wobei bevorzugt die Kennung den kodierten Daten zur Bildung des Chiffrats vorangestellt wird.

Dadurch lassen sich innerhalb einer Chiffrierfamilie beispielsweise unterschiedliche Kommunikationswege öffnen und gleichzeitig gegenüber unbefugtem Zugriff sichern.

Zweckmäßig ist es, wenn vor Erzeugung des Hauptschlüssels, des zufälligen Sitzungsschlüssels und/oder des zufälligen Hilfsstrings mit einer Zufallsquelle überprüft wird, ob die mit der Zufallsquelle erzeugten Zufallszahlen statistischen Testverfahren, insbesondere Entropie-, Run-, Long-Run-, Monobit-, Poker-Testverfahren genügen. Dadurch können Manipulationen bzw. Fehlfunktionen sicher ausgeschlossen werden.

Vorteilhaft wird zur Erzeugung des Hauptschlüssels, des zufälligen Sitzungsschlüssels und/oder des zufälligen Hilfsstrings eine physikalische Zufallsquelle verwendet, beispielsweise die aus der DE 10 2008 033 162 bekannte, da dann der erzeugte Zufall höchsten statistischen Anforderungen genügt. Alternativ kann allerdings vor allem in Bezug auf den zufälligen Sitzungsschlüssels und/oder den zufälligen Hilfsstrings auch eine Erzeugung als Pseudozufallszahl erfolgen, um das Verfahren einfacher durchführen zu können, da dann nicht jedem Teilnehmer der Chiffrierfamilie ein physikalischer Zufallszahlengenerator zur Verfügung gestellt werden muss.

Besonders zweckmäßig ist es, wenn eine Authentifizierung stattfindet. Dazu kann vorgesehen sein, dass bei Schritt a) von einem Benutzer eine Individualkennung abgefragt und von diesem Benutzer bereitgestellt wird und ein Individualcode, wobei Individualkennung und Individualcode bevorzugt zur Bildung eines Individualstrings, aus dem der Hauptschlüssel bereitgestellt wird, gemischt werden. Für diesen erfindungsgemäßen Authentifizierungsvorgang wird auch selbständiger Schutz beansprucht.

Dann ist es vorteilhaft, wenn der Hauptschlüssel aus der Individualkennung, insbesondere aus dem Individualstring durch Mischung mit einem in Bezug auf den Benutzer festgelegten Benutzerschlüssel erzeugt wird, da so zwischen verschiedenen Benutzern unterschieden werden kann.

Diesbezüglich kann außerdem vorgesehen sein, dass der Benutzerschlüssel aus einem für alle Benutzer gleichen Hilfshauptschlüssel und einer für den Benutzer feststehenden Benutzerhilfsschlüssel gebildet, insbesondere gemischt wird, wobei bevorzugt bei mehreren Verschlüsselungseinrichtungen einer Verschlüsselungsfamilie jeweils unterschiedliche Hilfshauptschlüssel und Benutzerhilfsschlüssel hinterlegt werden.

Zur noch stärkeren Absicherung gegenüber unbefugten Angriffen kann vorgesehen sein, dass die Verbindungskennung, der Hilfshauptschlüssel, der Benutzerschlüssel und/oder der Benutzerhilfsschlüssel in einer Hardwarekomponente abgespeichert sind und die Hardwarekomponente gezielt zerstörbar ausgebildet ist, wobei die Zerstörung bevorzugt bei Eintreffen einer oder mehrere der folgenden Kriterien ausgelöst wird: mehrmaliges, insbesondere fünfmaliges Bereitstellen eines falschen Individualcodes, mehrmaliges, insbesondere zweimaliges Bereitstellen einer falschen Individualkennung, Ortsveränderung der Hardwarekomponente, Öffnen der Hardwarekomponente oder der Vorrichtung, in der die Hardwarekomponente angeordnet ist, Manipulationsversuche an der Stromversorgung der Hardwarekomponente oder der Vorrichtung, manuelle Aktivierung in einem Notfall oder dgl. oder weitere Faktoren, wie Ansprechen eines Bewegungsmelders oder dgl. In einer besonders bevorzugten Ausgestaltung wird als Mischung eine logische XOR-Mischung oder eine logische erweiterte XOR-Mischung vorgenommen.

"Logisch XOR codieren" von zwei Zeichenketten heißt in diesem Zusammenhang, dass die eine Zeichenkette mit der anderen Zeichenkette mittels einer exklusiv-oder-Verknüpfung der einzelnen Bits zu einem Ergebnis zusammengeführt werden, wobei die andere Zeichenkette solange aneinandergereiht wird, bis diese Aneinanderreihung zumindest die Länge der einen Zeichenkette aufweist. Wenn beide Zeichenketten gleiche Länge aufweisen, dann erfolgt keine solche Aneinanderreihung.

"Logisch erweitert XOR codieren" von zwei Zeichenketten heißt in diesem Zusammenhang, dass eine Teillänge der einen Zeichenkette, die der Länge der anderen Zeichenkette entspricht, mit der anderen Zeichenkette bitmäßig exklusiv-oder-verknüpft wird und das erhaltene (Zwischen-)Ergebnis, das wiederum die Länge der anderen Zeichenkette aufweist, mit einem Teil des verbleibenden Teils der einen Zeichenkette wiederum exklusiv-oder-verknüpft wird, wobei dieser Teil wiederum der Länge der anderen Zeichenkette entspricht. Das daraus erhaltene Ergebnis wird dann wiederum mit einem entsprechenden Teil des verbleibenden Teils der einen Zeichenkette verknüpft und dieser Vorgang wird solange wiederholt, bis sämtliche Teile der einen Zeichenkette dieser Verknüpfung unterzogen worden sind. Das Ergebnis der logisch erweiterten XOR-Codierung besteht in der Aneinanderreihung der erhaltenen Zwischenergebnisse.

Bezüglich der genauen Darstellung dieser Mischvorgänge wird auf die DE 10 2009 022 233 verwiesen, deren gesamter Offenbarungsgehalt vor allem hinsichtlich der dort beschriebenen Mischvorgänge und der zugrunde liegenden Zeichenketten in die vorliegende Erfindung vollständig mit einbezogen wird.

Selbständiger Schutz wird auch beansprucht für eine Vorrichtung zur Verschlüsselung von Klardaten, wobei die Klardaten mit einem Schlüssel gemischt werden, um kodierte Daten zu bilden, insbesondere zur Ausführung des erfindungsgemäßen Verschlüsselungsverfahrens, wobei die Vorrichtung zumindest einen Speicher aufweist und eine Zufallsquelle, wobei die Vorrichtung angepasst ist, einen Hauptschlüssel bereit zu stellen, einen zufälligen Sitzungsschlüssel zu erzeugen, aus dem Hauptschlüssel und dem Sitzungsschlüssel einen Hilfsschlüssel zu erzeugen, den Hilfsschlüssel und die Klardaten zur Bildung der kodierten Daten zu mischen und aus den kodierten Daten und dem Sitzungsschlüssel ein Chiffrat zu bilden, wobei das Chiffrat Informationen über den Sitzungsschlüssel enthält, so dass mit Hilfe des Hauptschlüssels das Chiffrat in die Klardaten entschlüsselt werden kann.

Die Erfindung kann in Form einer völligen Hardware-Ausgestaltung, einer völligen Software-Ausgestaltung oder einer Ausgestaltung, die sowohl Hardwareals auch Software-Elemente enthält, verwirklicht werden. In einer bevorzugten Ausgestaltung ist die Erfindung in Software implementiert, die Firmware, systemeigene Software, Mikrocode und dgl. umfasst, jedoch nicht darauf beschränkt ist.

Weiterhin kann die Erfindung in Gestalt eines Computerprogrammprodukts verwirklicht werden, das von einem computernutzbaren oder computerlesbaren Medium zugänglich ist und einen Programmcode für die Benutzung durch oder für die Benutzung in Verbindung mit einem Computer oder jeden Befehlsausführungssystem bereitgestellt ist. Daher wird auch selbständiger Schutz beansprucht für ein Computerprogrammprodukt, das auf einem für einen Computer lesbaren Medium gespeichert ist und für den Computer lesbare Programmmittel umfasst, die den Computer veranlassen, das erfindungsgemäße Verfahren auszuführen, wenn die Programmmittel auf dem Computer ausgeführt werden.

Für die Zwecke dieser Beschreibung können computernutzbare oder computerlesbare Medien alle Einrichtungen oder Vorrichtungen sein, die das Programm für die Benutzung durch oder die Benutzung in Verbindung mit dem Befehlsausführungssystem, der Vorrichtung oder der Einrichtung enthalten, speichern, kommunizieren, verbreiten oder transportieren.

Das Medium kann ein elektronisches, magnetisches, optisches, elektromagnetisches, Infrarot- oder Halbleitersystem (oder Vorrichtung oder Einrichtung) sein oder ein Ausbreitungsmedium. Beispiele eines computerlesbaren Mediums umfassen einen Halbleiter oder Feststoffspeicher, Magnetband, eine entfernbare Computerdiskette, einen Random Access Memory (RAM), einen Read-only Memory (ROM), eine feste magnetische Disk und eine optische Disk. Gegenwärtige Beispiele von optischen Disks umfassen Compaktdisk-Read-only Memory (CD-ROM), Compaktdisk-Read/Write (CD-R/W) und DVD.

Ein Datenverarbeitungssystem, das geeignet ist, den Programmcode zu speichern und/oder auszuführen, umfasst wenigstens einen Prozessor, der direkt oder indirekt mit zumindest einem Speicherelement durch einen Systembus verbunden ist. Das Speicherelement kann lokalen Speicher umfassen, der während der aktuellen Ausführung des Programmcodes tätig wird, Massenspeicher und Pufferspeicher, der eine temporäre Speicherung von wenigstens einigen Programmcodes bereitstellt, um die Anzahl an Abrufen des Codes vom Massenspeicher während der Ausführung zu reduzieren.

Eingabe/Ausgabe- oder I/O-Einrichtungen, die Tastaturen, Displays, Zeigeeinrichtungen etc. umfassen können, jedoch nicht darauf limitiert sind, können mit dem System entweder direkt oder durch zwischengeschaltete I/O-Controller an das System angekoppelt sein.

Netzwerkadapter können ebenfalls mit dem System verbunden sein, um zu ermöglichen, dass das Daten verarbeitende System mit anderen Datenverarbeitungssystemen oder entfernten Druckern oder Speichereinrichtungen durch zwischengeschaltete private oder öffentliche Netzwerke angekoppelt wird. Modems, Kabelmodems oder Ethernet-Karten sind in diesem Zusammenhang nur einige Beispiele der gegenwärtig verfügbaren Typen von Netzwerkadaptern.

Die Merkmale und weitere Vorteile der folgenden Erfindung werden nun anhand der Darstellung eines bevorzugten Ausführungsbeispiels im Zusammenhang mit den Figuren deutlich werden. Dabei zeigen:
- Fig. 1: ein Blockschaltbild zur Durchführung der erfindungsgemäßen Verschlüsselung und
- Fig. 2a, 2b: ein Blockschaltbild zur Durchführung der erfindungsgemäßen Entschlüsselung.

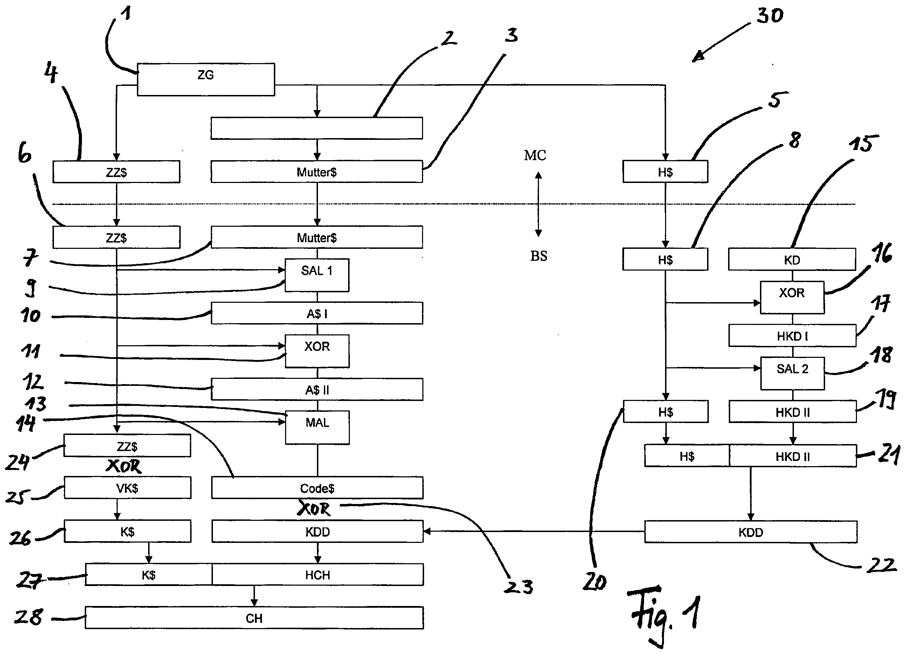

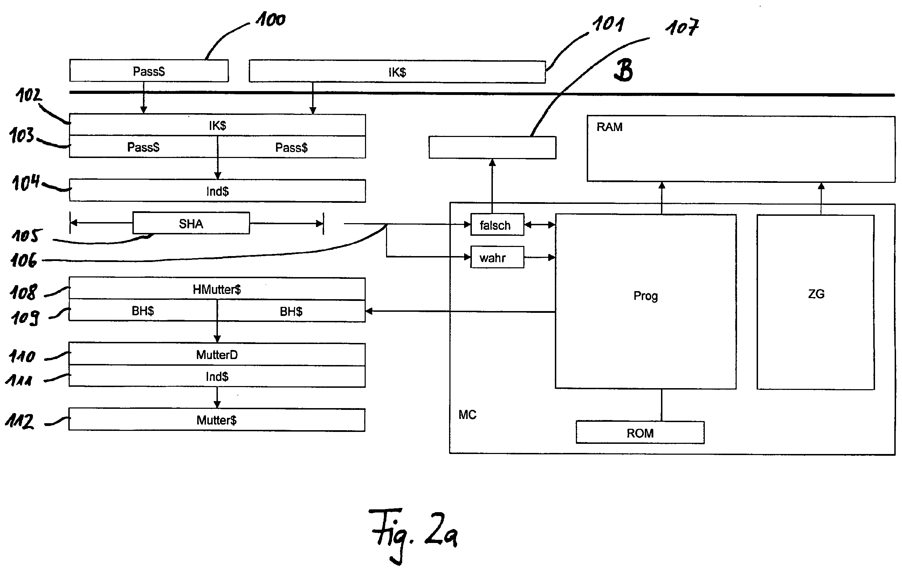

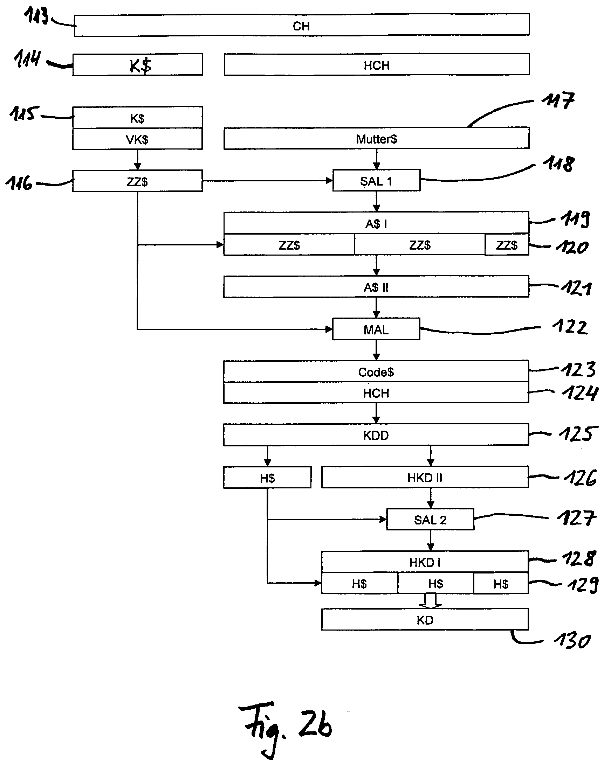

In Fig. 1 und Fig. 2 ist rein schematisch in Blockbilddarstellung der Ablauf des erfindungsgemäßen Verschlüsselungsverfahrens beim Verschlüsseln (vgl. Fig. 1) und beim Entschlüsseln der Klardaten (vgl. Fig. 2) dargestellt.

In Fig. 1 ist dabei unterschieden zwischen einer Mikrocontrollerseite MC und einer betriebssystembasierten Seite BS des Verschlüsselungsverfahrens. Im Rahmen des Mikrocontrollers MC wird im Schritt 1 ein physikalischer Zufallszahlengenerator ZG betrieben. Dies kann beispielsweise der physikalische Zufallszahlengenerator ZG gemäß DE 10 2008 033 162.7 sein, wobei der Offenbarungsgehalt dieser Patentanmeldung bezüglich der Erzeugung physikalischer Zufallszahlen hiermit vollständig einbezogen wird. Damit jegliche Fehler und Manipulationsversuche bei der Erzeugung der physikalischen Zufallszahl von vornherein ausgeschlossen werden, wird in Schritt 2 eine Untersuchung der erzeugten Zufallszahl nach statistischen Testverfahren u.a. auf Entropie, beispielsweise nach BSI Dokument FIPS-PUP-140-1, vorgenommen und erst danach erfolgt eine Freigabe der erzeugten Zufallszahl.

Bei der erstmaligen Initialisierung der geheimen Kommunikation zwischen verschiedenen Kommunikationspartnern wird mittel des Zufallszahlengenerators ZG ein Hauptschlüssel Mutter$ in Schritt 3 erzeugt, der im dargestellten Beispiel eine Größe von 100 MB aufweist. Dieser Hauptschlüssel Mutter$ gilt innerhalb der Chiffrierfamilie ständig und stellt im Rahmen eins One-Time-Pad-Schlüssels den notwendigen Zufall bereit. In Schritt 4 wird bei jeder neuen Klardatenverschlüsselung ein Sitzungsschlüssel ZZ$ erzeugt, der eine Größe von beispielsweise 34 Byte aufweist. Außerdem wird in Schritt 5 noch ein Hilfsstring H$ mit einer Größe von beispielsweise 24 Byte erzeugt. Diese drei Schlüssel Mutter$, ZZ$, H$ werden vom Mikrocontroller MC einem Betriebssystem BS zur Verfügung gestellt und das Betriebssystem BS übernimmt die Schlüssel in den Schritten 6, 7 und 8.

Im Rahmen eines ersten Splitalgorithmus SAL 1 im Schritt 9 wird aus dem Hauptschlüssel Mutter$ ein erster Arbeitsschlüssel A$ I erzeugt, der die gleiche Länge wie der Hauptschlüssel Mutter$ aufweist (vgl. Schritt 8). Im Rahmen des ersten Splitalgorithmus SAL 1 ist vorgesehen, dass aus dem Sitzungsschlüssel ZZ$ eine Zufallszahl gewonnen wird, die sich im Wertebereich von 0 bis 100 MB, also der Länge des Hauptschlüssels Mutter$, bewegt. In Abhängigkeit von dieser Zufallszahl wird der Hauptschlüssel Mutter$ an der Stelle ausgehend vom Beginn des Hauptschlüssels Mutter$ in zwei Teile separiert, die der Zufallszahl entspricht. Die zwei Teile werden dann miteinander vertauscht und dadurch der erste Arbeitsschlüssel A$ I in Schritt 10 gebildet. Anschließend wird in Schritt 11 der Sitzungsschlüssel ZZ$ fortlaufend mit dem ersten Arbeitsschlüssel A$ I XOR-codiert, wodurch der zweite Arbeitsschlüssel A$ II in Schritt 12 erzeugt wird, der ebenfalls die Länge des Hauptschlüssels Mutter$ aufweist. Abschließend wird im Rahmen von Schritt 13 mit Hilfe eines Mischalgorithmus MAL aus dem zweiten Arbeitsschlüssel A$ II der Hilfsschlüssel Code$ entsprechend Schritt 14 erzeugt. Hinsichtlich dieses Mischalgorithmus MAL und auch jeglicher weiterer Mischoperationen wird auf den gesamten Offenbarungsgehalt und insbesondere auf Fig. 3 und die zugehörige Beschreibung der DE 10 2009 022 233.2 Bezug genommen, deren Inhalt hiermit vollständig einbezogen wird.

Bei diesem Mischalgorithmus MAL wird eine Aufteilung des zweiten Arbeitsschlüssels A$ II in zumindest zwei Teile vorgenommen und diese Teile werden miteinander gemischt, wobei der eine Teil nur Zeichen oder Bit-Folgen enthält, die in dem Sitzungsschlüssel ZZ$ enthalten sind, und der andere Teil nur Zeichen oder Bit-Folgen enthält, die nicht in dem Sitzungsschlüssel ZZ$ enthalten sind. Die Mischung erfolgt als logisch erweiterte XOR-Codierung.

Außerdem werden die Klardaten KD, die dem Betriebssystem BS in Schritt 15 zur Verfügung gestellt werden, fortlaufend mit dem in Schritt 8 bereit gestellten Hilfsstring H$ in Schritt 16 XOR-codiert und dadurch erste Hilfsklardaten HKD I in Schritt 17 erzeugt. Diese ersten Hilfsklardaten HKD I werden dann in Schritt 18 einem zweiten Splitalgorithmus SAL 2 unterzogen, der demjenigen von Schritt 9 entspricht, wobei jedoch zur Erzeugung der Zufallszahl der in Schritt 8 bereit gestellte Hilfsstring H$ verwendet wird. Damit werden die ersten Hilfsklardaten HKD I wieder an einer der Zufallszahl entsprechenden Stelle in Bezug auf den Beginn der ersten Hilfsklardaten HKD I separiert und die beiden Teile werden vertauscht und aneinander angefügt und dadurch in Schritt 19 die zweiten Hilfsklardaten HKD II erzeugt. Zugleich wird in Schritt 20 der Hilfsstring H$ übernommen, um in Schritt 21 den Hilfsklardaten HKD II vorangestellt zu werden, um in Schritt 22 den eigentlichen Klardatendummy KDD zu bilden.

Dieser Klardatendummy KDD wird in Schritt 23 mit dem in Schritt 14 erzeugten Hilfsschlüssel Code$ XOR-codiert und dadurch ein Hilfschiffrat HCH erzeugt, dem in Schritt 27 eine Kennung K$ vorangestellt wird, um dadurch in Schritt 28 das Chiffrat CH zu bilden. Diese Kennung K$ wird aus dem in Schritt 24 übernommenen Sitzungsschlüssel ZZ$ erzeugt, der mit einer in Schritt 25 bereitgestellten Verbindungskennung VK$ XOR-codiert wird, um in Schritt 26 die Kennung K$ zu erzeugen. Die Kennung K$ enthält dabei die Informationen des Sitzungsschlüssels ZZ$, so dass auch das Chiffrat CH diese Informationen enthält.

Diese Verbindungskennung VK$ weist die gleiche Größe wie der Sitzungsschlüssel ZZ$ auf und ist charakteristisch für die innerhalb der Chiffrierfamilie benutzte Kommunikation des Chiffrats, also beispielsweise für zwei Kommunikationsteilnehmer innerhalb der Chiffrierfamilie, die das Chiffrat austauschen, um dadurch die Klardaten KD auszutauschen.

Grundsätzlich kann auch vorgesehen sein, dass Sitzungsschlüssel ZZ$ und Hilfsstring H$ als identische Schlüssel bereitgestellt werden.

Auch wenn vorstehend der Hauptschlüssel Mutter$ eine Länge von 1 MB, der Sitzungsschlüssel ZZ$ eine Länge von 34 Byte und der Hilfsschlüssel eine Länge von 24 Byte aufweisen und auch anderen Elementen bestimmte Längen zugewiesen sind, ist die Erfindung darauf nicht festgelegt, sondern bei der vorgenommenen oberen Bemessung der Länge richtete man sich nach den aktuelle vorhandenen technischen Möglichkeiten.

Die in Fig. 1 dargestellten Manipulationen, die in der Vorrichtung 30 vorgenommen werden, wirken ersichtlich auf zwei verschiedene Seiten, nämlich zum einen auf die Integritätsseite durch alle Manipulationen, die an den Klardaten KD vorgenommen werden, um den Klardatendummy KDD zu erzeugen, und die Vertraulichkeitsseite, die alle Manipulationen beinhaltet, die zur Erzeugung der Kennung K$ und des Hilfsschlüssels Code$ vorgenommen werden.

Dabei ist zum einen zu erkennen, dass durch den ersten Splitalgorithmus SAL 1 auf der Vertraulichkeitsseite verhindert wird, dass selbst bei einem Verrat von zwei Hilfsschlüsseln Code$ nicht auf den Hauptschlüssel Mutter$ rückgerechnet werden kann. Dies wird noch durch den verwendeten Mischalgorithmus MAL in Schritt 14 verstärkt. Auf der Integritätsseite wird durch den zweiten Splitalgorithmus SAL 2 und auch die weiteren Manipulationen an den Klardaten KD ein Ausspionieren des Hauptschlüssels Mutter$ selbst dann verhindert, wenn die Klardaten KD bitgenau verraten werden.

In Fig. 2a und 2b ist nunmehr rein schematisch in Blockbilddarstellung der Entschlüsselungsprozess des erfindungsgemäßen Verschlüsselungsverfahrens dargestellt.

Der vorgesehene Empfänger B des Chiffrats CH meldet sich zuerst beim Mikrocontroller MC an, um sich zu authentisieren (vgl. Fig. 2a). Dazu hält er einen Individualcode Pass$ gemäß Schritt 100 bereit, der beispielsweise 38 Byte groß ist, und er hält außerdem beispielsweise über eine Compact Flash Card eine Individualkennung IK$ in Schritt 101 bereit, die 100 MB groß ist. Beides wird dem Mikrocontroller MC mitgeteilt, beispielsweise die Individualkennung IK$ eingelesen und der Individualcode Pass$ eingegeben.

Dieser Mikrocontroller MC weist einen Zufallszahlengenerator ZG auf, einen ROM-Speicher ROM, einen RAM-Speicher RAM, der vorliegend einer Datenverarbeitungsanlage, beispielsweise einem PC zugeordnet ist, und beinhaltet verschiedene Handlungsvorschriften als Programmcode Prog.

Im Mikrocontroller MC wird die in Schritt 102 übernommene Individualkennung IK$ mit dem in Schritt 103 übernommenen Individualcode Pass$ fortlaufend XOR-codiert und dadurch in Schritt 104 ein Individualstring Ind$ erzeugt, der ebenfalls eine Länge von 100 MB aufweist. In Schritt 105 wird über eine Länge von ca. 1 kB dieses Individualstring Ind$ ein Hashwert SHA gebildet und dieser Hashwert SHA mit im Mikrocontroller MC abgelegten Hashwerten SHA in Schritt 106 verglichen. Falls der Hashwert SHA korrekt ist, hat sich der Benutzer B ordnungsgemäß authentisiert und der Mikrocontroller MC nimmt die Authentifizierung vor. Falls jedoch ein falscher Hashwert SHA ermittelt wird, dann wird die Authentifizierung abgebrochen und der Vorgang in Schritt 107 protokolliert.

Nach erfolgreicher Authentifizierung wird in Schritt 108 ein im ROM, einem EEPROM oder dgl. des Mikrocontrollers MC oder an anderer Stelle zerstörbar gespeicherter Hilfshauptschlüssel HMutter$ mit einer Länge von 100 MB freigegeben und in Schritt 109 aus dem RAM des Mikrocontrollers MC ein für den angemeldeten Benutzer feststehender Benutzerhilfsschlüssel BH$ mit einer Länge von beispielsweise 500 kB. Der Benutzerhilfsschlüssel BH$ wird fortlaufend mit dem Hilfshauptschlüssel HMutter$ XOR-codiert und dadurch in Schritt 110 ein Hauptschlüsseldummy MutterD erzeugt, der ebenfalls eine Länge von 100 MB aufweist. Dieser Hauptschlüsseldummy MutterD wird mit dem in Schritt 111 übernommenen Individualstring Ind$ XOR-codiert und so in Schritt 112 der Hauptschlüssel Mutter$ erzeugt.

Auch wenn diese Authentisierung vorstehend nur für den Entschlüsselungsprozess dargestellt ist, so kann das gleiche Verfahren auch zur Authentisierung vor dem Verschlüsseln von Klardaten vorgenommen werden. Dass heißt, dass in diesem Fall der Hauptschlüssel Mutter$ durch Authentisierung entsprechend Fig. 2a bereitgestellt wird, dann mittels des Zufallszahlengenerators ZG der Sitzungsschlüssel ZZ$ und der Hilfsstring H$ erzeugt und anschließend der erste und zweite Splitalgorithmus SAL 1, SAL 2 gemäß den Schritten 9 und 16 durchgeführt werden.

Beim erstmaligen Initialisieren einer Chiffrierfamilie wird mittels des Zufallszahlengenerators ZG der Hauptschlüssel Mutter$ erzeugt und den Testverfahren unterzogen. Weiterhin wird für jeden verwendeten Mikrocontroller MC ein Hilfshauptschlüssel HMutter$ erzeugt und statistisch getestet sowie für jeden Benutzer B der Chiffrierfamilie Benutzerhilfsschlüssel BH$. Durch XOR-Codierung wird aus Hilfshautschlüssel HMutter$ und jedem Benutzerhilfsschlüssel BH$ ein zum jeweiligen Benutzer B gehöriger Hauptschlüsseldummy MutterD erzeugt. Durch XOR-Coierung mit dem Hauptschlüssel Mutter$ erhält jeder Benutzer B einen Individualstring Ind$. Durch XOR-Codierung mit dem vom Benutzer B gewählten Individualcode Pass$ wird für jeden Benutzer B die Individualkennung IK$ erzeugt, die dann beispielsweise auf einer Compact Flash Card hinterlegt und dem Benutzer B ausgehändigt wird.

Auf diese Weise ist der eigentliche Hauptschlüssel Mutter$ in der Chiffrierfamilie nicht unmittelbar existent, sondern nur mittelbar in Form von Individualkennung IK$, Individualcode$, Hilfshauptschlüssel HMutter$ und Benutzerhilfsschlüssel BH$. Eine besondere Sicherung liegt darin, dass der Hilfshauptschlüssel HMutter$ für den Gefahrenfall zerstörbar in einem ROM hinterlegt ist, so dass nach dessen Zerstörung auch bei Kenntnis von Individualkennung IK$, Individualcode$, und Benutzerhilfsschlüssel BH$ keinerlei Rückschlüsse auf den Hauptschlüssel Mutter$ ziehbar sind.

In Fig. 2b ist nun der weitere Fortgang der eigentlichen Entschlüsselung dargestellt. In Schritt 113 wird das gemäß Fig. 1 in Schritt 17 erzeugte Chiffrat CH übernommen und es wird die Kennung K$ abgespalten, deren Länge dem Empfänger bekannt ist und die der Länge seiner eigenen Verbindungskennung VK$ entspricht. Dadurch wird in Schritt 114 die Kennung K$ gewonnen und das Hilfschiffrat HCH. Diese Kennung K$ wird in Schritt 115 mit der vom Mikrocontroller MC für den angemeldeten Benutzer B gespeicherten Verbindungskennung VK$ XOR-codiert und daraus der Sitzungsschlüssel ZZ$ in Schritt 116 gewonnen. Außerdem wird in Schritt 117 der Hauptschlüssel Mutter$ übernommen. Mit Hilfe des Sitzungsschlüssels ZZ$ wird eine Zufallszahl gewonnen und mit deren Hilfe wird bei Benutzung des ersten Splitalgorithmus SAL 1 in Schritt 118 und des Hauptschlüssels Mutter$ der erste Arbeitsschlüssel A$ I in Schritt 119 gewonnen. Dieser erste Arbeitsschlüssel A$ I wird wiederum in Schritt 120 mit dem Sitzungsschlüssel ZZ$ fortlaufend XOR-codiert um in Schritt 121 den zweiten Arbeitsschlüssel A$ II zu gewinnen. Über den Sitzungsschlüssel ZZ$ wird wiederum mit Hilfe des Mischalgorithmus MAL in Schritt 122 aus dem zweiten Arbeitsschlüssel A$ II der Hilfsschlüssel Code$ in Schritt 123 gewonnen.

Diese vorgenommenen Schritte 116 bis 123 der Entschlüsselung entsprechen exakt denjenigen Schritten 6 bis 14 auf der Vertraulichkeitsseite während der Verschlüsselung, die benutzt worden sind, um den Hilfsschlüssel Code$ aus dem Hauptschlüssel Mutter$ zu erzeugen.

Nun wird der Hilfsschlüssel Code$ mit dem in Schritt 124 übernommenen Hilfschiffrat XOR-codiert, um daraus den Klardatendummy KDD in Schritt 125 zu gewinnen. Aus diesem Klardatendummy KDD wird in Schritt 126 der 24 Byte große Hilfsstring H$ abgetrennt, um dadurch die zweiten Hilfsklardaten HKD II zu erzeugen. Mit Hilfe des Hilfsstrings H$ und der Anwendung des zweiten Splitalgorithmus SAL 2 in Schritt 127 werden aus den zweiten Hilfsklardaten HKD II dadurch die ersten Hilfsklardaten HKD I in Schritt 128 gebildet, dass die aus dem Hilfsstring H$ gewonnene Zufallszahl wieder als Basis für den Teilungspunkt verwendet wird, wobei diesmal jedoch der Teilungspunkt nicht von vorn, wie bei der Verschlüsselung, sondern von hinten angesetzt wird. Die so erzeugten ersten Hilfsklardaten HKD I werden in Schritt 129 fortlaufend mit dem übernommenen Hilfsstring H$ XOR-codiert, um daraus in Schritt 130 die Klardaten KD selbst zu erzeugen.

Weiterhin und was nicht gesondert dargestellt ist, kann in dem erfindungsgemäßen Verfahren vorteilhaft vorgesehen werden, dass über einzelne Elemente zur Kontrolle ein Hashwert SHA gelegt wird, der besonders bevorzugt noch mit einem Zeitstempel versehen ist. Beispielsweise wird dem Klartextdummy KDD ein Zeitschlüssel vorangestellt und über alles ein Hashwert SHA gebildet, der ebenfalls dem Klartextdummy KDD angefügt wird. Bei der Verschlüsselung beinhaltet dann das Hilfschiffrat HCH Informationen über diesen Hashwert SHA und den Zeitstempel.

Das erfindungsgemäße Verschlüsselungsverfahren ist sehr sicher, wie im Folgenden dargestellt wird. Die Sicherheit gilt dabei dann als gebrochen, wenn ein Angreifer den Hilfsschlüssel Code$ berechnen oder mit einer vertretbaren Wahrscheinlichkeit erraten kann. Letztendlich gilt es dabei, die teilnehmerbezogene Verbindungskennung VK$ und den Hauptschlüssel Mutter$ zu kompromittieren.

Dazu kann ein Angreifer zum einen die Funktionsweise von eingesetzter Hardware und Software ergründen, zum anderen daraus bei Kenntnis eines Chiffrats CH auf das Hilfschiffrat HCH und die Verbindungskennung VK$ Rückschlüsse ziehen und außerdem bei Verrat bzw. Insiderwissen einige bitgenaue Klartexte KD einspeisen.

Zu unterscheiden ist dabei hinsichtlich Angriffen auf die Vertraulichkeit zum einen und Angriffen auf die Integrität zum anderen.

Ein Angriff auf die Vertraulichkeit kann erfolgen, wenn ein Klartext KD bekannt ist und so über den konkreten Wegwerfschlüssel Code$ auf den Hauptschlüssel Mutter$ rückgerechnet wird. Allerdings besteht kein direkter Zusammenhang über eine XOR-Codierung zwischen Klartext KD und Chiffrat CH. Weiterhin ist auch kein mathematisches Lösungsproblem selbst im Spiel, so dass nur ein Angriff über Brute-Force-Attacken möglich ist. Allerdings laufen solche Attacken ins Leere, da aufgrund des verwendeten One-Time-Pad-Schlüssels alle Lösungen gleich wahrscheinlich sind.

Daraus folgt, dass auf der Vertraulichkeitsseite ein Angriff auf den Hilfsschlüssel Code$ und dessen eindeutige Bestimmung praktisch und auch theoretisch nicht möglich sind.

Auf der Integritätsseite könnt ein Angriff beispielsweise dadurch erfolgen, dass Bit-Manipulationen vorgenommen werden. Bei stark strukturierten und sich ständig wiederholenden Klartexten KD können dann unter Umständen die Positionen einiger Klartextbits nachvollzogen werden. Beispielsweise könnten gezielt Bits im Chiffrat CH gekippt werden, um Manipulationen im Klartext KD zu bewirken. Dies kann mit dem erfindungsgemäßen Verschlüsselungsverfahren nicht verhindert werden, jedoch werden solche Attacken erheblich erschwert. Außerdem werden solche Manipulationen mit Sicherheit aufgedeckt werden.

Dies liegt daran, dass durch die Manipulation, insbesondere den Splitalgorithmus, auf der Integritätsseite sich der Klartext KD nicht immer an gleicher Stelle in den Klartextdummys KDD sich befindet. Hier werden durch den Zufall zahlreiche Möglichkeiten gegeben. Ein Angreifer braucht dann viele Versuche, um einmal richtig zu liegen. Eine solche Vorgehensweise würde aber innerhalb der Chiffrierfamilie bemerkt werden und es könnten rechtzeitig Abwehrmaßnahmen getroffen werden. Außerdem kann der Angreifer nicht feststellen, wann er richtig lag.

Außerdem wird über den Zeitstempel und den Klartextdummy KDD ein Hashwert gebildet und verschlüsselt mit übertragen. Ein Angreifer kennt allerdings nicht den Hashwert und kann also auch nicht über Hashwertkollisionen am Klartext KD manipulieren. Eine jede solche Manipulation würde bemerkt werden.

Eine andere Möglichkeit würde darin bestehen, dass Angreifer ein Chiffrat CH mehrfach versenden. Auch dies kann durch das erfindungsgemäße Verschlüsselungsverfahren nicht verhindert werden, es würde aber ebenfalls sichtbar werden.

Wenn ein und dieselbe Nachricht kurz hintereinander mehrfach verschickt wird, hat der Empfänger mehrere Nachrichten gleicher Länge, mit gleichem Zeitstempel vom selben Sender. Dies kann nicht sein. Der Empfänger muss nur diese Daten kurzzeitig im Speicher halten und vergleichen, wodurch die Manipulation entdeckt werden würde.

Wenn jedoch ein und dieselbe Nachricht zu einem späteren Zeitpunkt nochmals unautorisiert verschickt würde, gäbe es einen Widerspruch zwischen dem aktuellen und dem übertragenen Zeitstempel, wodurch ebenfalls die Manipulation entdeckt würde.

Daraus ist zu erkennen, dass Manipulationen am Chiffrat CH sowie mehrfaches unautorisiertes Versenden von Chiffraten CH nicht verhindert werden können, solche Manipulationen jedoch mit Sicherheit aufgedeckt werden würden.

Aus den vorstehenden Darlegungen ist deutlich geworden, dass das erfindungsgemäße Verfahren sehr flexibel einsetzbar und gleichzeitig äußerst sicher ist.

## Patentansprüche

1. Verfahren zur Verschlüsselung von Klardaten (KD), wobei die Klardaten (KD) mit einem Schlüssel (Code$) gemischt werden, um kodierte Daten (HCH) zu bilden,
**dadurch gekennzeichnet, dass** das Verfahren die folgenden Schritte umfasst:
a) Bereitgestellen eines Hauptschlüssels (Mutter$),
b) Erzeugung eines zufälligen Sitzungsschlüssels (ZZ$),
c) Erzeugung eines Hilfsschlüssels (Code$) aus dem Hauptschlüssel (Mutter$) und dem Sitzungsschlüssel (ZZ$), wobei eine Aufteilung des Hauptschlüssels (Mutter$) in zwei Teile und die Mischung der Teile erfolgt, wobei der eine Teil nur Zeichen oder Bit-Folgen enthält, die in dem Sitzungsschlüssel (ZZ$) enthalten sind, und der andere Teil nur Zeichen oder Bit-Folgen enthält, die nicht in dem Sitzungsschlüssel (ZZ$) enthalten sind, oder
Erzeugung eines Hilfsschlüssels (Code$) aus dem Hauptschlüssel (Mutter$) und dem Sitzungsschlüssel (ZZ$), wobei vor Erzeugung des Hilfsschlüssels (Code$) ein oder mehrere Arbeitsschlüssel (A$ I, A$ II) aus dem Hauptschlüssel (Mutter$) erzeugt werden, wobei eine Aufteilung eines der Schlüssel aus der Gruppe umfassend Hauptschlüssel (Mutter$) und die Arbeitsschlüssel (A$ I, A$ II) in zwei Teile und die Mischung der Teile erfolgen, wobei der eine Teil nur Zeichen oder Bit-Folgen enthält, die in dem Sitzungsschlüssel (ZZ$) enthalten sind, und der andere Teil nur Zeichen oder Bit-Folgen enthält, die nicht in dem Sitzungsschlüssel (ZZ$) enthalten sind,
d) Mischung des Hilfsschlüssels (Code$) und der Klardaten (KD) zur Bildung der kodierten Daten (HCH) und
e) Bildung eines Chiffrats (CH) aus den kodierten Daten (HCH) und dem Sitzungsschlüssel (ZZ$), wobei das Chiffrat (CH) Informationen über den Sitzungsschlüssel (ZZ$) enthält, so dass mit Hilfe des Hauptschlüssels (Mutter$) das Chiffrat (CH) in die Klardaten (KD) entschlüsselt werden kann.

2. Verfahren nach Anspruch 1, **dadurch gekennzeichnet, dass** in einem Schritt f) aus den Klardaten (KD) ein Klardatendummy (KDD) erzeugt wird, der in Schritt d) mit dem Hilfsschlüssel (Code$) zu den codierten Daten (HCH) gemischt wird, wobei bevorzugt ein zufälliger Hilfsstring (H$) erzeugt wird, der bei der Erzeugung des Klardatendummys (KDD) verwendet wird und insbesondere der Hilfsstring (H$) dem Klartextdummy (HKD II) vorangestellt wird und dann Schritt d) ausgeführt wird.

3. Verfahren zur Verschlüsselung von Klardaten (KD), wobei die Klardaten (KD) mit einem Schlüssel (Code$) gemischt werden, um kodierte Daten (HCH) zu bilden,
**dadurch gekennzeichnet, dass** das Verfahren die folgenden Schritte umfasst:
a) Bereitgestellen eines Hauptschlüssels (Mutter$),
b) Erzeugung eines zufälligen Sitzungsschlüssels (ZZ$),
c) Erzeugung eines Hilfsschlüssels (Code$) aus dem Hauptschlüssel (Mutter$) und dem Sitzungsschlüssel (ZZ$),
d) Mischung des Hilfsschlüssels (Code$) und der Klardaten (KD) zur Bildung der kodierten Daten (HCH),
e) Bildung eines Chiffrats (CH) aus den kodierten Daten (HCH) und dem Sitzungsschlüssel (ZZ$), wobei das Chiffrat (CH) Informationen über den Sitzungsschlüssel (ZZ$) enthält, so dass mit Hilfe des Hauptschlüssels (Mutter$) das Chiffrat (CH) in die Klardaten (KD) entschlüsselt werden kann und
f) Erzeugung eines Klardatendummy (KDD) aus den Klardaten (KD), der in Schritt d) mit dem Hilfsschlüssel (Code$) zu den codierten Daten (HCH) gemischt wird, wobei ein zufälliger Hilfsstring (H$) erzeugt wird, der bei der Erzeugung des Klardatendummys (KDD) verwendet wird, wobei eine Aufteilung der Klardaten (KD) in zwei Teile und die Mischung der Teile erfolgt, wobei der eine Teil nur Zeichen oder Bit-Folgen enthält, die in dem Hilfsstring (H$) enthalten sind, und der andere Teil nur Zeichen oder Bit-Folgen enthält, die nicht in dem Hilfsstring (H$) enthalten sind, oder
Erzeugung eines Klardatendummy (KDD) aus den Klardaten (KD), der in Schritt d) mit dem Hilfsschlüssel (Code$) zu den codierten Daten (HCH) gemischt wird, wobei ein zufälliger Hilfsstring (H$) erzeugt wird, der bei der Erzeugung des Klardatendummys (KDD) verwendet wird, wobei vor Erzeugung des Klardatendummys (KDD) ein oder mehrere Hilfsklardaten (HKD I, HKD II) aus den Klardaten (KD) erzeugt werden, wobei eine Aufteilung eines der Daten aus der Gruppe umfassend Klardaten (KD) und Hilfsklardaten (HKD I, HKD II) in zwei Teile und Mischung der Teile eines der Schlüssel aus der Gruppe umfassend Hauptschlüssel (Mutter$) und die Arbeitsschlüssel (A$ I, A$ II) in zumindest zwei Teile und die Mischung der Teile erfolgt, wobei der eine Teil nur Zeichen oder Bit-Folgen enthält, die in dem Hilfsstring (H$) enthalten sind, und der andere Teil nur Zeichen oder Bit-Folgen enthält, die nicht in dem Hilfsstring (H$) enthalten sind.

4. Verfahren nach Anspruch 3, **dadurch gekennzeichnet, dass** der Hilfsstring (H$) dem Klartextdummy (HKD II) vorangestellt wird und dann Schritt d) ausgeführt wird.

5. Verfahren nach einem der vorherigen Ansprüchen, **dadurch gekennzeichnet, dass** in Schritt c) und/oder in Schritt f) zumindest ein oder mehrere der folgenden Operationen vorgenommen werden, wobei gegebenenfalls vor Erzeugung des Hilfsschlüssels (Code$) ein oder mehrere Arbeitsschlüssel (A$ I, A$ II) aus dem Hauptschlüssel (Mutter$) oder vor Erzeugung des Klardatendummys (KDD) ein oder mehrere Hilfsklardaten (HKD I, HKD II) aus den Klardaten (KD) erzeugt werden:
i) Vornehmen einer Mischung des Hauptschlüssels (Mutter$) und/oder eines Arbeitsschlüssels (A$ I, A$ II) mit dem Sitzungsschlüssel (ZZ$) oder Vornehmen einer Mischung der Klardaten (KD) und/oder der Hilfsklardaten (HKD I; HKD II) mit dem Hilfsstring (H$);
ii) Vornehmen einer Aufteilung des Hauptschlüssels (Mutter$), der Klardaten (KD), der Hilfsklardaten (HKD I, HKD II) und/oder eines Arbeitsschlüssels (A$ I, A$ II) in mindestens zwei Teile und Änderung der Reihenfolge der Teile;
iii) Vornehmen einer Mischung von zumindest zwei der Schlüssel aus der Gruppe umfassend Hauptschlüssel (Mutter$) und die Arbeitsschlüssel (A$ I, A$ II) oder Vornehmen einer Mischung von zumindest zwei der Daten aus der Gruppe umfassend Klardaten (KD) und die Hilfsklardaten (HKD I, HKD II);
iv) Vornehmen einer Aufteilung eines der Schlüssel aus der Gruppe umfassend Hauptschlüssel (Mutter$) und die Arbeitsschlüssel (A$ I, A$ II) in zumindest zwei Teile und Mischung der Teile oder Vornehmen einer Aufteilung eines der Daten aus der Gruppe umfassend Klardaten (KD) und Hilfsklardaten (HKD I, HKD II) in zumindest zwei Teile und Mischung der Teile.

6. Verfahren nach Anspruch 5, **dadurch gekennzeichnet, dass** bei der Operation ii) aus dem Sitzungsschlüssel (ZZ$) eine erste Zufallszahl gewonnen wird und der Hauptschlüssel (Mutter$) basierend auf der ersten Zufallszahl geteilt wird, wobei bevorzugt der Hauptschlüssel (Mutter$) in zwei Hauptschlüssel-Teile geteilt wird und der ursprünglich vor dem anderen Hauptschlüssel-Teil angeordnete Hauptschlüssel-Teil nach diesem anderen Hauptschlüssel-Teil angeordnet wird, und/oder dass aus dem Hilfsstring (H$) eine zweite Zufallszahl gewonnen wird und die Klardaten (KD) basierend auf der zweiten Zufallszahl geteilt werden, wobei bevorzugt die Klardaten (KD) in zwei Klardaten-Teile geteilt werden und der ursprünglich vor dem anderen Klardaten-Teil angeordnete Klardaten-Teil nach diesem anderen Klardaten-Teil angeordnet wird.

7. Verfahren nach Anspruch 5 oder 6, **dadurch gekennzeichnet, dass** in Operation iv) der eine Teil nur Zeichen oder Bit-Folgen enthält, die in dem Sitzungsschlüssel (ZZ$) oder Hilfsstring (H$) enthalten sind, und der andere Teil nur Zeichen oder Bit-Folgen enthält, die nicht in dem Sitzungsschlüssel (ZZ$) oder Hilfsstring (H$) enthalten sind.

8. Verfahren nach einem der vorherigen Ansprüche, **dadurch gekennzeichnet, dass** weiterhin ein Schritt g) vorgenommen wird, in dem eine Verbindungskennung (VK$) bereitgestellt wird, die charakteristisch ist für die Weiterverarbeitung des Chiffrats (CH), insbesondere dessen Speicherung und/oder Weiterleitung zu einem Empfänger (B), wobei die Verbindungskennung (VK$) in Schritt e) verwendet wird, um aus dem Sitzungsschlüssel (ZZ$) insbesondere durch Mischung eine Kennung (K$) zu erzeugen, aus der mit den kodierten Daten (HCH) das Chiffrat (CH) gebildet wird, wobei bevorzugt die Kennung (K$) den kodierten Daten (HCH) zur Bildung des Chiffrats (CH) vorangestellt wird.

9. Verfahren nach einem der vorherigen Ansprüche, **dadurch gekennzeichnet, dass** vor Erzeugung des Hauptschlüssels (Mutter$), des zufälligen Sitzungsschlüssels (ZZ$) und/oder des zufälligen Hilfsstrings (H$) mit einer Zufallsquelle (ZG) überprüft wird, ob die mit der Zufallsquelle (ZG) erzeugten Zufallszahlen statistischen Testverfahren, insbesondere Entropie-, Run-, Long-Run-, Monobit-, Poker-Testverfahren genügen.

10. Verfahren nach einem der vorherigen Ansprüche, **dadurch gekennzeichnet, dass** bei Schritt a) von einem Benutzer (B) eine Individualkennung (IK$) abgefragt und von diesem Benutzer (B) bereitgestellt wird und ein Individualcode (Pass$), wobei Individualkennung (IK$) und Individualcode (Pass$) bevorzugt zur Bildung eines Individualstrings (Ind$), aus dem der Hauptschlüssel (Mutter$) bereitgestellt wird, gemischt werden.

11. Verfahren nach Anspruch 10, **dadurch gekennzeichnet, dass** der Hauptschlüssel (Mutter$) aus der Individualkennung (IK$), insbesondere aus dem Individualstring (Ind$) durch Mischung mit einem in Bezug auf den Benutzer (B) festgelegten Benutzerschlüssel (MutterD) erzeugt wird.

12. Verfahren nach Anspruch 11, **dadurch gekennzeichnet, dass** der Benutzerschlüssel (MutterD) aus einem für alle Benutzer (B) gleichen Hilfshauptschlüssel (HMutter$) und einem für den Benutzer (B) feststehenden Benutzerhilfsschlüssel (BH$) gebildet, insbesondere gemischt wird, wobei bevorzugt bei mehreren Verschlüsselungseinrichtungen einer Verschlüsselungsfamilie jeweils unterschiedliche Hilfshauptschlüssel (HMutter$) und Benutzerhilfsschlüssel (BH$) hinterlegt werden.

13. Verfahren nach einem der Ansprüche 7 bis 12, **dadurch gekennzeichnet, dass** die Verbindungskennung (VK$), der Hilfshauptschlüssel (HMutter$), der Benutzerschlüssel (MutterD) und/oder der Benutzerhilfsschlüssel (BH$) in einer Hardwarekomponente (MC, ROM) abgespeichert sind und die Hardwarekomponente (MC, ROM) gezielt zerstörbar ausgebildet ist, wobei die Zerstörung bevorzugt bei Eintreffen einer oder mehrere der folgenden Kriterien ausgelöst wird: mehrmaliges, insbesondere fünfmaliges Bereitstellen eines falschen Individualcodes (Pass$), mehrmaliges, insbesondere zweimaliges Bereitstellen einer falschen Individualkennung (IK$), Ortsveränderung der Hardwarekomponente (MC, ROM), Öffnen der Hardwarekomponente (MC, ROM) oder der Vorrichtung (30), in der die Hardwarekomponente (MC, ROM) angeordnet ist, Manipulationsversuche an der Stromversorgung der Hardwarekomponente (MC, ROM) oder der Vorrichtung (30), manuelle Aktivierung in einem Notfall oder dgl. oder weitere Faktoren, wie Ansprechen eines Bewegungsmelders oder dgl.

14. Vorrichtung (30) zur Verschlüsselung von Klardaten (KD), wobei die Klardaten (KD) mit einem Schlüssel (Code$) gemischt werden, um kodierte Daten (HCH) zu bilden, insbesondere zur Ausführung des Verfahrens nach einem der vorherigen Ansprüche, wobei die Vorrichtung (30) zumindest einen Speicher (ROM, RAM) aufweist und eine Zufallsquelle (ZG), **dadurch gekennzeichnet, dass** die Vorrichtung (30) angepasst ist, einen Hauptschlüssel (Mutter$) bereit zu stellen, einen zufälligen Sitzungsschlüssel (ZZ$) zu erzeugen, aus dem Hauptschlüssel (Mutter$) und dem Sitzungsschlüssel (ZZ$) einen Hilfsschlüssel (Code$) zu erzeugen, den Hilfsschlüssel (Code$) und die Klardaten (KD) zur Bildung der kodierten Daten (HCH) zu mischen und aus den kodierten Daten (HCH) und dem Sitzungsschlüssel (ZZ$) ein Chiffrat (CH) zu bilden, wobei das Chiffrat (CH) Informationen über den Sitzungsschlüssel (ZZ$) enthält, so dass mit Hilfe des Hauptschlüssels (Mutter$) das Chiffrat (CH) in die Klardaten (KD) entschlüsselt werden kann, wobei die Vorrichtung weiter angepasst ist, das Verfahren nach einem der Ansprüche 1 bis 13 auszuführen.

15. Computerprogammprodukt, das auf einem für einen Computer lesbaren Medium gespeichert ist, umfassend für den Computer lesbare Programmmittel, die den Computer veranlassen, ein Verfahren nach einem der Ansprüche 1 bis 13 aus zuführen, wenn die Programmmittel auf dem Computer ausgeführt werden.

## Claims

1. Method for the encryption of plain data (KD), wherein the plain data (KD) is mixed with a key (Code$) to form encoded data (HCH),
**characterized in that** the method comprises the following steps:
a) providing a main key (Mutter$),
b) generating a random session key (ZZ$),
c) generating an auxiliary key (Code$) from the main key (Mutter$) and the session key (ZZ$), wherein the main key (Mutter$) is split into two parts and the parts are mixed, wherein one part contains only characters or bit strings contained in the session key (ZZ$), and the other part contains only characters or bit strings not contained in the session key (ZZ$), or generating an auxiliary key (Code$) from the main key (Mutter$) and the session key (ZZ$), wherein prior to the generation of the auxiliary key (Code$) one or multiple working keys (A$ I, A$ II) are generated from the main key (Mutter$), wherein one of the keys from the group including the main key (Mutter$) and the working keys (A$1, A$II) is split into two parts and the parts are mixed, wherein one part contains only characters or bit strings contained in the session key (ZZ$), and the other part contains only characters or bit strings not contained in the session key (ZZ$),
d) mixing the auxiliary key (Code$) and the plain data (KD) to form the encoded data (HCH), and
e) forming a cyphertext (CH) from the encoded data (HCH) and the session key (ZZ$), wherein the cyphertext (CH) includes information about the session key (ZZ$), so that the cyphertext (CH) can be decrypted into the plain data (KD) using the main key (Mutter$).

2. Method according to claim 1, **characterized in that** a plain data dummy (KDD) is generated in a step f) from the plain data (KD), which is mixed with the auxiliary key (Code$) to form the encoded data (HCH) in step d), wherein preferably a random auxiliary string (H$) is generated, which is used in the generation of the plain data dummy (KDD) and, in particular the auxiliary string (H$) is prepended to the plain text dummy (HKD II) and then step d) is conducted.

3. Method for the encryption of plain data (KD), wherein the plain data (KD) is mixed with a key (Code$) to form encoded data (HCH),
**characterized in that** the method comprises the following steps:
a) providing a main key (Mutter$),
b) generating a random session key (ZZ$),
c) generating an auxiliary key (Code$) from the main key (Mutter$) and the session key (ZZ$),
d) mixing the auxiliary key (Code$) and the plain data (KD) to form the encoded data (HCH),
e) forming a cyphertext (CH) from the encoded data (HCH) and the session key (ZZ$), wherein the cyphertext (CH) includes information about the session key (ZZ$), so that the cyphertext (CH) can be decrypted into the plain data (KD) using the main key (Mutter$), and
f) generating a plain data dummy (KDD) from the plain data (KD), which is mixed with the auxiliary key (Code$) to form the encoded data (HCH) in step d), wherein a random auxiliary string (H$) is generated, which is used in the generation of the plain data dummy (KDD), wherein the plain data (KD) is split into two parts and the parts are mixed, wherein one part includes only characters or bit strings contained in the auxiliary string (H$) and the other part includes only characters or bit strings not contained in the auxiliary string (H$), or
generating a plain data dummy (KDD) from the plain data (KD), which is mixed with the auxiliary key (Code$) to form the encoded data (HCH) in step d), wherein a random auxiliary string (H$) is generated, which is used in the generation of the plain data dummy (KDD), wherein one or multiple auxiliary plain data (HKD 1, HKD II) are generated from the plain data (KD) prior to the generation of the plain data dummy (KDD), wherein one of the data from the group including the plain data (KD) and auxiliary plain data (HKD I, HKD II) is split into two parts and the parts of one of the keys from the group including the main key (Mutter$) and the working key (A$ I, A$ II) in at least two parts and the parts are mixed, wherein one part contains only characters or bit strings contained in the auxiliary string (H$), and the other part contains only characters or bit strings not contained in the auxiliary string (H$).

4. Method according to claim 3, **characterized in that** the auxiliary string (H$) is prepended to the plain text dummy (HKD II), and then step d) is executed.

5. Method according to any of the preceding claims, **characterized in that** in step c) and/or step f), at least one of the following operations are performed, wherein, as the case may be, one or more working keys (A$I, A$II) are generated from the main key (Mutter$) to form the auxiliary key (Code$), or one or multiple auxiliary plain data (HKD I, HKD II) are generated from the plain data (KD) prior to the generation of the plain data dummy (KDD):
i) mixing the main key (Mutter$) and/or of a working key (A$ I, A$ II) with the session key (ZZ$), or mixing the plain data (KD) and/ or the auxiliary plain data (HKD I; HKD II) with the auxiliary string (H$);
ii) splitting the main key (Mutter$), the plain data (KD), the auxiliary plain data (HKD I; HKD II) and/or a working key (A$ I, A$ II) into at least two parts and changing the order of the parts;
iii) mixing of at least two of the keys from the group including the main key (Mutter$) and the working keys (A$ I, A$ II) or mixing of at least two of the data from the group including plain data (KD) and the auxiliary plain data (HKD I; HKD II);
iv) splitting one of the keys from the group including the main key (Mutter$) and the working keys (A$ I, A$ II) into at least two parts and mixing of the parts, or splitting one of the data from the group including plain data (KD) and auxiliary plain data (HKD I; HKD II) into at least two parts and mixing of the parts.

6. Method according to claim 5, **characterized in that** a first random number is derived from the session key (ZZ$) in the operation ii), and the main key (Mutter$) is split on the basis of the first random number, wherein the main key (Mutter$) preferably is split into two main key parts and the main key part originally arranged in front of the other main key part is arranged behind this other main key part, and/or **in that** a second random number is derived from the auxiliary string (H$) and the plain data are split on the basis of the second random number, wherein the plain data (KD) preferably are split into two plain data parts and the plain data part originally arranged in front of the other plain data part is arranged behind this other plain data part.

7. Method according to claim 5 or 6, **characterized in that** in operation iv) one part includes only characters or bit strings contained in the session key (ZZ$) or the auxiliary string (H$), and the other part includes only characters or bit strings not contained in the session key (ZZ$) or the auxiliary string (H$).

8. Method according to one of the preceding claims, **characterized in that** moreover a step g) is conducted, in which a connection identifier (VK$) is provided, which is characteristic to the further processing of the cyphertext (CH), in particular the storage thereof and/or the forwarding to a receiver (B), wherein the connection identifier (VK$) is used in step e), in order to generate an identifier (K$), in particular by mixing, from the session key (ZZ$), from which identifier, together with the encoded data (HCH), is formed the cyphertext (CH), wherein preferably the identifier (K$) is arranged in front of the encoded data (HCH) to form the cyphertext (CH).

9. Method according to one of the preceding claims, **characterized in that** prior to the generation of the main key (Mutter$), the random session key (ZZ$) and/or the random auxiliary string (H$), it is verified, with a random source (ZG), whether the random data generated with the random source (ZG) are sufficient for statistic testing methods, in particular for entropy, run, long-run and mono-bit, poker testing methods.

10. Method according to one of the preceding claims, **characterized in that** an individual identifier (IK$) is requested from a user (B) in step a) and that said identifier is provided by this user (B), and an individual code (Pass$), wherein the individual identifier (IK$) and individual code (Pass$) are preferably mixed to form an individual string (Ind$), from which the main key (Mutter$) is provided.

11. Method according to claim 10, **characterized in that** the main key (Mutter$) is generated form the individual identifier (IK$), in particular from the individual string (Ind$), by mixing with a user key (MutterD) specified with respect to the user (B).

12. Method according to claim 11, **characterized in that** the user key (MutterD) is formed, in particular mixed, from an auxiliary main key (HMutter$) equal for all users (B) and a user auxiliary key (BH$) set for the user (B), wherein preferably in multiple encryption means of one encryption family, different auxiliary main keys (HMutter$) and user auxiliary keys (BH$) are stored.

13. Method according to one of claims 7 to 12, **characterized in that** the connection identifier (VK$), the auxiliary main key (HMutter$), the user key (MutterD) and/or the user auxiliary key (BH$) are stored on a hardware component (MC, ROM), and the hardware component (MC, ROM) is formed to be destroyable intentionally, wherein the destruction is preferably triggered upon the occurrence of one or more of the following criteria: multiple-time, in particular five times, providing of a wrong individual code (Pass$), multiple-time, in particular two times, providing of a wrong individual identifier (IK$), change of location of the hardware component (MC, ROM), opening of the hardware component (MC, ROM) or of the device (30), in which the hardware component (MC, ROM) is arranged, manipulation attempts to the power supply of the hardware component (MC, ROM) or the device (30), manual activation in case of emergency or the like, or further factors, such as the triggering of a motion detector or the like.

14. Device (30) for the encryption of plain data (KD), wherein the plain data (KD) are mixed with a key (Code$) to form encoded data (HCH), in particular for the performing of the method according to any one of the preceding claims, wherein the device (30) includes at least one memory (ROM, RAM) and a random source (ZG), **characterized in that** the device (30) is adapted to provide a main key (Mutter$), to generate a random session key (ZZ$), to generate an auxiliary key (Code$) from the main key (Mutter$) and the session key (ZZ$), to mix the auxiliary key (Code$) and the plain data (KD) to form the encoded data (HCH), and to create a cyphertext (CH) from the encoded data (HCH) and the session key (ZZ$), wherein the cyphertext (CH) includes information about the session key (ZZ$), so that the cyphertext can be decrypted into the plain data (KD) using the main key (Mutter$), wherein the device is further adapted to perform the method according to any one of claims 1 to 13.

15. Computer program product, which is stored on a computer-readable medium, comprising program means readable by the computer and causing the computer to perform a method according to any one of claims 1 to 13 upon execution of the program means on the computer.

## Revendications

1. Procédé servant à crypter des données en texte clair (KD), dans lequel les données en texte clair (KD) sont mélangées à une clé (Code$) pour obtenir des données codées (HCH), **caractérisé en ce que** le procédé comprend les étapes suivantes :
a) la fourniture d'une clé principale (Mutter$),
b) la génération d'une clé de session (ZZ$) aléatoire,
c) la génération d'une clé auxiliaire (Code$) à partir de la clé principale (Mutter$) et de la clé de session (ZZ$), dans lequel une division de la clé principale (Mutter$) en deux parties et le mélange des parties ont lieu, dans lequel une partie ne contient que des caractères ou des suites binaires qui sont contenus dans la clé de session (ZZ$), ou l'autre partie ne contient que des caractères ou des suites binaires qui ne sont pas contenus dans la clé de session (ZZ$), ou
la génération d'une clé auxiliaire (Code$) à partir de la clé principale (Mutter$) et de la clé de session (ZZ$), dans lequel avant la génération de la clé auxiliaire (Code$) une ou plusieurs clés de travail (A$ I, A$ II) sont générées à partir de la clé principale (Mutter$), dans lequel une division d'une des clés parmi le groupe comprenant la clé principale (Mutter$) et la clé de travail (A$ I, A$ II) en deux parties et le mélange des parties ont lieu, dans lequel l'une partie ne contient que des caractères ou des suites binaires qui sont contenus dans la clé de session (ZZ$) et l'autre partie ne contient que des caractères ou des suites binaires qui ne sont pas contenus dans la clé de session (ZZ$),
d) le mélange de la clé auxiliaire (Code$) et des données en texte clair (KD) pour obtenir les données codées (HCH), et
e) l'obtention d'un cryptogramme (CH) à partir des données codées (HCH) et de la clé de session (ZZ$), dans lequel le cryptogramme (CH) contient des informations portant sur la clé de session (ZZ$) de sorte que le cryptogramme (CH) peut être décrypté en les données en texte clair (KD) à l'aide de la clé principale (Mutter$).

2. Procédé selon la revendication 1, **caractérisé en ce que** lors d'une étape f) sont générées à partir des données en texte clair (KD) des données en texte clair factices (KDD), qui sont mélangées lors de l'étape d) à la clé auxiliaire (Code$) pour former les donnes codées (HCH), dans lequel de manière préférée une chaîne auxiliaire (H$) aléatoire est générée, qui est utilisée lors de la génération des données en texte clair factices (KDD), et en particulier les données en texte clair factices (HKD II) sont précédées de la chaîne auxiliaire (H$) et alors l'étape d) est exécutée.

3. Procédé servant à crypter des données en texte clair (KD), dans lequel les données en texte clair (KD) sont mélangées à une clé (Code$) afin d'obtenir des données codées (HCH), **caractérisé en ce que** le procédé comprend les étapes suivantes :
a) la fourniture d'une clé principale (Mutter$),
b) la génération d'une clé de session (ZZ$) aléatoire,
c) la génération d'une clé auxiliaire (Code$) à partir de la clé principale (Mutter$) et de la clé de session (ZZ$),
d) le mélange de la clé auxiliaire (Code$) et des données en texte clair (KD) pour obtenir les données codées (HCH),
e) l'obtention d'un cryptogramme (CH) à partir des données codées (HCH) et de la clé de session (ZZ$), dans lequel le cryptogramme (CH) contient des informations portant sur la clé de session (ZZ$) de sorte que le cryptogramme (CH) peut être décrypté en les données en texte clair (KD) à l'aide de la clé principale (Mutter$), et
f) la génération de données en texte clair factices (KDD) à partir des données en texte clair (KD), lesquelles sont mélangées lors de l'étape d) à la clé auxiliaire (Code$) pour former les données codées (HCH), dans lequel une chaîne auxiliaire (H$) aléatoire est générée, qui est utilisée lors de la génération des données en texte clair factices (KDD), dans lequel une division des données en texte clair (KD) en deux parties et le mélange des parties ont lieu, dans lequel une partie ne contient que des caractères ou des suite binaires qui sont contenus dans la chaîne auxiliaire (H$) et l'autre partie ne contient que des caractères ou des chaînes binaires qui ne sont pas contenus dans la chaîne auxiliaire (H$), ou
la génération de données en texte clair factices (KDD) à partir des données en texte clair (KD), lesquelles sont mélangées lors de l'étape d) à la clé auxiliaire (Code$) pour former les données codées (HCH), dans lequel une chaîne auxiliaire (H$) aléatoire est générée, qui est utilisée lors de la génération des données en texte clair factices (KDD), dans lequel avant la génération des données en texte clair factices (KDD) une ou plusieurs données en texte clair auxiliaires (HKD I, HKD II) sont générées à partir des données en texte clair (KD), dans lequel une division de données des données parmi le groupe comprenant les données en texte clair (KD) et les données en texte clair auxiliaires (HKD I, HKD II) en deux parties et le mélange des parties d'une des clés parmi le groupe comprenant la clé principale (Mutter$) et la clé de travail (A$ I, A$ II) en au moins deux parties et le mélange des parties ont lieu, dans lequel une partie ne contient que des caractères ou des suites binaires qui sont contenus dans la chaîne auxiliaire (H$), et l'autre partie ne contient que des caractères ou des suites binaires qui ne sont pas contenus dans la chaîne auxiliaire (H$).

4. Procédé selon la revendication 3, **caractérisé en ce que** les données en texte clair factices (HKD II) sont précédées de la chaîne auxiliaire (H$) et l'étape d) est ensuite exécutée.

5. Procédé selon l'une quelconque des revendications précédentes, **caractérisé en ce que** lors de l'étape c) et/ou de l'étape f), au moins une ou plusieurs des opérations suivantes sont réalisées, dans lequel éventuellement avant la génération de la clé auxiliaire (Code$), une ou plusieurs clés de travail (A$ I, A$ II) sont générées à partir de la clé principale (Mutter$) ou une ou plusieurs données en texte clair auxiliaires (HKD I, HKDII) sont générées à partir des données en texte clair (KD) avant la génération des données en texte clair factices (KDD) :
i) la réalisation d'un mélange de la clé principale (Mutter$) et/ou d'une clé de travail (A$ I, A$ II) avec la clé de session (ZZ$) ou la réalisation d'un mélange des données en texte clair (KD) et/ou des données en texte clair auxiliaires (HKD I ; HKD II) avec la chaîne auxiliaire (H$) ;
ii) la réalisation d'une division de la clé principale (Mutter$), des données en texte clair (KD), des données en texte clair auxiliaires (HKD I, HKDII) et/ou d'une clé de travail (A$ I, A$ II) en au moins deux parties et la modification de l'ordre des parties ;
iii) la réalisation d'un mélange d'au moins deux des clés parmi le groupe comprenant la clé principale (Mutter$) et les clés de travail (A$ I, A$ II) ou la réalisation d'un mélange d'au moins deux des données parmi le groupe comprenant des données en texte clair (KD) et les données en texte clair auxiliaires (HKD I, HKD II) ;
iv) la réalisation d'une division d'une des clés parmi le groupe comprenant la clé principale (Mutter$) et la clé de travail (A$ I, A$ II) en au moins deux parties, et le mélange des parties ou la réalisation d'une division de données des données parmi le groupe comprenant les données en texte clair (KD) et les données en texte clair auxiliaires (HKD I, HKD II) en au moins deux parties et le mélange des parties.

6. Procédé selon la revendication 5, **caractérisé en ce que** lors de l'opération ii), un premier chiffre aléatoire est obtenu à partir de la clé de session (ZZ$) et la clé principale (Mutter$) est divisée sur la base du premier chiffre aléatoire, dans lequel de manière préférée la clé principale (Mutter$) est divisée en deux parties de clé principale et la partie de clé principale disposée à l'origine avant l'autre partie de clé principale est disposée après cette autre partie de clé principale, et/ou qu'un deuxième chiffre aléatoire est obtenu à partir de la chaîne auxiliaire (H$) et les données en texte clair (KD) sont divisées sur la base du deuxième chiffre aléatoire, dans lequel de manière préférée les données en texte clair (KD) sont divisées en deux parties de données en texte clair et la partie de données en texte clair disposée à l'origine avant l'autre partie de données en texte clair est disposée après ladite autre partie de données en texte clair.

7. Procédé selon la revendication 5 ou 6, **caractérisé en ce que** lors de l'opération iv), l'une partie ne contient que des caractères ou des suites binaires qui sont contenus dans la clé de session (ZZ$) ou dans la chaîne auxiliaire (H$) et l'autre partie ne contient que des caractères ou des suites binaires qui ne sont pas contenus dans la clé de session (ZZ$) ou dans la chaîne auxiliaire (H$).

8. Procédé selon l'une quelconque des revendications précédentes, **caractérisé en ce que** par ailleurs une étape g) est réalisée, dans laquelle un identifiant de connexion (VK$) est fourni, qui est caractéristique du traitement ultérieur du cryptogramme (CH), en particulier de son stockage et/ou de son transfert à un récepteur (B), dans lequel l'identifiant de connexion (VK$) est utilisé lors de l'étape e) afin de générer à partir de la clé de session (ZZ$) en particulier par mélange un identifiant (K$), à partir duquel le cryptogramme (CH) est obtenu avec les données codées (HCH), dans lequel de manière préférée les données codées (HCH) sont précédées de l'identifiant (K$) pour obtenir le cryptogramme (CH).

9. Procédé selon l'une quelconque des revendications précédentes, **caractérisé en ce qu'**on vérifie avant la génération de la clé principale (Mutter$), de la clé de session aléatoire (ZZ$) et/ou de la chaîne auxiliaire aléatoire (H$) avec une source aléatoire (ZG) si les chiffres aléatoires générés avec la source aléatoire (ZG) répondent à des procédés de test statistiques, en particulier à des procédés de test d'entropie, run, long run, monobit, poker.

10. Procédé selon l'une quelconque des revendications précédentes, **caractérisé en ce que** lors de l'étape a), un identifiant individuel (IK$) est demandé auprès d'un utilisateur et est fourni par ledit utilisateur (B) et un code individuel (Pass$) est fourni, dans lequel l'identifiant individuel (IK$) et le code individuel (Pass$) sont mélangés de manière préférée pour obtenir une chaîne individuelle (Ind$), à partir de laquelle la clé principale (Mutter$) est fournie.

11. Procédé selon la revendication 10, **caractérisé en ce que** la clé principale (Mutter$) est générée à partir de l'identifiant individuel (IK$), en particulier à partir de la chaîne individuelle (Ind$) par mélange avec une clé d'utilisateur (MutterD) fixée par rapport à l'utilisateur (B).

12. Procédé selon la revendication 11, **caractérisé en ce que** la clé d'utilisateur (MutterD) est obtenue, en particulier est mélangée, à partir d'une clé principale auxiliaire (HMutter$) identique pour tous l'utilisateur (B) et d'une clé auxiliaire d'utilisateur (BH$) fixée pour l'utilisateur (B), dans lequel de manière préférée respectivement différentes clés principales auxiliaires (HMutter$) et clés auxiliaires d'utilisateur (BH$) sont enregistrées pour plusieurs systèmes de cryptage d'une famille de cryptage.

13. Procédé selon l'une quelconque des revendications 7 à 12, **caractérisé en ce que** l'identifiant de connexion (VK$), la clé principale auxiliaire (HMutter$), la clé d'utilisateur (MutterD) et/ou la clé auxiliaire d'utilisateur (BH$) sont sauvegardés dans un composant de matériel (MC, ROM), et le composant de matériel (MC, ROM) est réalisé de manière à pouvoir être détruit de manière ciblée, dans lequel la destruction est déclenchée de manière préférée en présence d'un ou de plusieurs des critères suivants : la fourniture à plusieurs reprises, en particulier 5 fois, d'un code individuel erroné (Pass$), la fourniture à plusieurs reprises, en particulier 2 fois, d'un code individuel (IK$) erroné, le changement de localisation du composant de matériel (MC, ROM), l'ouverture du composant de matériel (MC, ROM) ou du dispositif (30), dans lequel le composant de matériel (MC, ROM) est disposé, des tentatives de manipulation sur l'alimentation en courant du composant de matériel (MC, ROM) ou du dispositif (30), l'activation manuelle dans un cas d'urgence ou similaire, ou d'autres facteurs, tels que réponse à un détecteur de mouvement ou similaire.

14. Dispositif (30) servant à crypter des données en texte clair (KD), dans lequel les données en texte clair (KD) sont mélangées à une clé (Code$) pour obtenir des données codées (HCH), en particulier pour exécuter le procédé selon l'une quelconque des revendications précédentes, dans lequel le dispositif (30) présente au moins une mémoire (ROM, RAM) et une source aléatoire (ZG), **caractérisé en ce que** le dispositif (30) est adapté pour fournir une clé principale (Mutter$), pour générer une clé de session (ZZ$) aléatoire, pour générer à partir de la clé principale (Mutter$) et de la clé de session (ZZ$) une clé auxiliaire (Code$), pour mélanger la clé auxiliaire (Code$) et les données en texte clair (KD) pour obtenir les données codées (HCH) et pour obtenir à partir des données codées (HCH) et de la clé de session (ZZ$) un cryptogramme (CH), dans lequel le cryptogramme (CH) contient des informations portant sur la clé de session (ZZ$) de sorte que le cryptogramme (CH) peut être décrypté en les données en texte clair (KD) à l'aide de la clé principale (Mutter$), dans lequel le dispositif est par ailleurs adapté pour exécuter le procédé selon l'une quelconque des revendications 1 à 13.

15. Produit-programme informatique, qui est mémorisé sur un support lisible par un ordinateur, comprenant des éléments de programme lisibles par ordinateur, qui amènent l'ordinateur à exécuter le procédé selon l'une quelconque des revendications 1 à 13 quand les éléments de programme sont exécutés sur l'ordinateur.
